# EUROPÄISCHE PATENTSCHRIFT

(11) **EP 1 976 664 B1**
(45) Veröffentlichungstag und Bekanntmachung des Hinweises auf die Patenterteilung: **01.03.2017**
(21) Anmeldenummer: 06828715.0
(22) Anmeldetag: 20.12.2006
(51) Int. Cl.: B23P 21/00, B23Q 37/00

(54) **MODULEINSCHÜB DER IN EINER BEARBEITUNGSSTRASSE EINFÜHRBAR IST**
MODULAR TRAY INSERTABLE IN A PROCESSING LINE
TIROIR MODULAIRE INSERABLE DANS UNE LIGNE DE PRODUCTION

(30) Priorität: 16.01.2006 DE 102006002082
(43) Veröffentlichungstag der Anmeldung: 08.10.2008
(73) Patentinhaber: Robert Bosch GmbH, 70469 Stuttgart (DE)
(72) Erfinder: HINDERER, Karl, 74427 Fichtenberg (DE); SKLJAROW, Paul, 71701 Schwieberdingen (DE); BAIER, Wolfram, 73760 Ostfildern (DE); JÄGER, Karl-Heinz, 96148 Baunach (DE); PFEIFFER, Stefan, 96052 Bamberg (DE); WESTPHAL, Frank, 71665 Vaihingen/Enz (DE); FRANGEN, Joachim, 74081 Heilbronn (DE); SCHLAICH, Peter, 71229 Leonberg (DE); BENKERT, Frank, 97769 Bad Brückenau - Volkers (DE); TEOH, Ka-Jin, 45147 Essen (DE); BÜSING, Boris, 70376 Stuttgart (DE)
(74) Vertreter: Maiß, Harald
(86) Internationale Anmeldenummer: PCT/DE2006/002286
(87) Internationale Veröffentlichungsnummer: WO 2007/079710

(56) Entgegenhaltungen:
- EP-A- 1 637 280
- WO-A-2005/095049
- DE-A1- 19 729 369
- DE-A1- 19 741 671
- DE-U1-202004 020 190
- JP-A- 2005 059 180
- US-A- 4 519 491

## Beschreibung

Die vorliegende Erfindung betrifft einen Moduleinschub der mit einer Teil-Transportvorrichtung fest verbunden ist und gemeinsam mit dieser in eine Modulplattform einer Bearbeitungsstraße einführbar ist, gemäß dem Oberbegriff des Anspruchs 1. Ein solcher Moduleinschub ist aus der WO2005/096049 A1 bekannt.

Bearbeitungsplätze sind beispielsweise aus der DE 197 29 369 A1 und der DE 197 41 671 A1 bekannt. Bei diesen bekannten Bearbeitungsplätzen ist fest mit der Modulplattform eine Transportvorrichtung verbunden, welche Werkstücke über die gesamte Breite der Modulplattform fördern kann. In der Modulplattform sind sogenannte Einschubaufnahmen vorgesehen, in die als "Prozessmodule" bezeichnete Moduleinschübe einführbar sind. Gleichartige Bearbeitungsplätze sind dabei zu einer Bearbeitungsstraße aneinandergereiht.

Die bekannten Moduleinschübe umfassen zumindest Steuergehäuse, die für die Steuerung von Einzelkomponenten, wie Bearbeitungs- und Handhabungsgeräten, erforderlich sind. Sie können jedoch auch die genannten Geräte selbst umfassen.

Durch den modularen Aufbau der bekannten Bearbeitungsplätze ist ein verhältnismäßig schnelles Umrüsten eines Bearbeitungsplatzes von einer Bearbeitungsaufgabe auf eine andere Bearbeitungsaufgabe möglich. Mit "Bearbeitungsaufgabe" sind dabei auch bloße Handhabungsvorgänge bezeichnet, mit welchen lediglich eine Lage- oder Orientierungsveränderung von Werkstücken, nicht jedoch eine stoffliche oder/und formliche Änderung oder dergleichen verbunden ist.

Weiterhin wird auf die US 4,519,491 A hingewiesen.

Nachteilig an den bekannten gattungsgemäßen Bearbeitungsplätzen ist der beim Umrüsten von einer Bearbeitungsaufgabe auf eine andere entstehende Justieraufwand, da der neue Moduleinschub mit den an ihm ggf. vorgesehenen Geräten nach dem Einführen in die Modulplattform zu der fest mit letzterer verbundenen Transportvorrichtung ausgerichtet und justiert werden muss, da sichergestellt werden muss, dass die Werkstücke sich zur Bearbeitung an einem wohldefinierten Ort befinden, an dem eine automatisierte Bearbeitung oder/und Handhabung mit ausreichend großer Genauigkeit ausgeführt werden kann.

Es ist daher Aufgabe der vorliegenden Erfindung, die bekannten Bearbeitungsplätze derart weiterzubilden, dass die notwendige Justierarbeit vermieden oder zeitlich verlagert werden kann, so dass eine noch schnellere Umrüstung des Bearbeitungsplatzes von einer Bearbeitungsaufgabe auf eine andere möglich ist.

Diese Aufgabe wird gelöst mit einem Moduleinschub gemäß den Merkmalen des Patentanspruchs 1. Vorteilhafte Ausgestaltungen des Moduleinschubs sind in den Unteransprüchen angegeben.

Da die Transportvorrichtung Teil-Transportvorrichtungen umfasst, von welchen jede fest mit einem Moduleinschub verbunden ist, kann die Ausrichtung von Bearbeitungs- und Handhabungsgeräten, die ebenfalls auf dem Moduleinschub vorgesehen sein können, bereits vor der zeitlichen Zusammenführung von Moduleinschub und Modulplattform stattfinden, so dass die Ausrichtung von Bearbeitungs- und Handhabungsgeräten im Rahmen der Arbeitsvorbereitung zu einem unkritischen Zeitpunkt stattfinden kann und den eigentlichen Umrüstvorgang, d.h. die Zeit vom Arbeitsende des bereits eingerichteten Bearbeitungsplatzes bis zum Arbeitsbeginn des umgerüsteten Bearbeitungsplatzes, nicht verlängert.

Zwar ist im Vergleich mit den Bearbeitungsplätzen des Standes der Technik durch die Mehrzahl der notwendigen Teil-Transportvorrichtungen ein gewisser Mehraufwand zu erwarten. Überraschenderweise hat sich jedoch gezeigt, dass bei einer Serienherstellung der Moduleinschübe mit der darauf jeweils vorgesehenen Teil-Transportvorrichtung ein höherer Aufwand bei der Herstellung des einzelnen Moduls überkompensiert werden kann, so dass nicht nur die Vorteile einer schnelleren Umrüstbarkeit des jeweiligen Bearbeitungsplatzes sondern auch Kostenvorteile bei der Herstellung der Moduleinschübe erzielbar sind.

Zwar reicht es grundsätzlich aus, eine Teil-Transportvorrichtung vorzusehen, welche dazu ausgebildet ist, ein Werkstück über den Moduleinschub hinweg, also beispielsweise von einem vorhergehenden Moduleinschub zu einem in Transportrichtung nachfolgenden Moduleinschub zu fördern. Jedoch kann die Kapazität eines Bearbeitungsplatzes dadurch wesentlich erhöht werden, dass die Teil-Transportvorrichtung eine zweite Transportstrecke zum Transport eines Werkstücks im Wesentlichen über die Breite des Moduleinschubs in eine zweite, der ersten entgegengesetzte Transportrichtung umfasst. Weiterhin soll nicht ausgeschlossen sein, dass ein Bearbeitungsplatz Moduleinschübe mit einer Teil-Transportvorrichtung aufweist, welche das Werkstück umlenkt, vorzugsweise um 90° oder um 180°.

Grundsätzlich sollen die Teil-Transportvorrichtungen nicht nur dazu ausgebildet sein, das Werkstück über eine vollständige Moduleinschub-Abmessung hinweg zu fördern, sondern das Werkstück auch an einer vorbestimmten oder vorbestimmbaren Position anzuhalten. Hierzu können die Transportstrecken selektiv ansteuerbare Anhaltevorrichtungen aufweisen, welche zum Anhalten eines Werkstücks in einer bestimmten Position aktivierbar sind. Es kann jedoch auch daran gedacht sein, das Werkstück durch ein Handhabungsgerät, wie etwa einen Roboter, am Transportband anzuhalten oder abzunehmen. Weiterhin kann daran gedacht sein, die Teil-Transportvorrichtung als Ganzes im Betrieb zu stoppen, um ein Werkstück in einer gewünschten Position anzuhalten. Dies reicht beispielsweise dann aus, wenn eine Bearbeitung des Werkstücks auf der Transportstrecke selbst gewünscht ist.

In der gezielten Betreibbarkeit der Transportstrecken der einzelnen Moduleinschübe liegt ein weiterer Vorteil der vorliegenden Erfindung. Dann nämlich, wenn an einem Bearbeitungsplatz mehrere Moduleinschübe mit an diesen angeordneten Bearbeitungsgeräten vorgesehen sind, können die Transportstrecken der einzelnen Moduleinschübe einzeln angesteuert werden und innerhalb des Bearbeitungsplatzes unabhängig voneinander Werkstücke in gewünschte Positionen fördern.

Für einen möglichst flexiblen Materialfluss kann vorgesehen sein, dass der Moduleinschub eine Transportstrecken-Umsetzeinrichtung zum Umsetzen von Werkstücken zwischen der ersten und der zweiten Transportstrecke umfasst.

Für eine Bildung einer Bearbeitungsstraße aus einer Mehrzahl von in Materialflussrichtung aufeinanderfolgenden Bearbeitungsplätzen mit je einer Modulplattform und Moduleinschüben ist vorteilhafterweise vorgesehen, dass die Transportstrecken der Mehrzahl von Moduleinschüben zur Bildung einer Bearbeitungsplatz-Transportstrecke in der jeweiligen Transportrichtung aneinander anschließen.

Es ist im Stand der Technik durchaus bekannt, einen Werkstücktransport auch um einen bestimmten Winkel umzulenken, häufig um 90°, etwa durch eine Hub-Quer-Einrichtung. Mit den hier bezeichneten Transportrichtungen sollten daher die Materialflussrichtungen unabhängig von derartigen Umlenkungen verstanden werden.

Eine möglichst gute Zugänglichkeit von Moduleinschüben am Bearbeitungsplatz kann dadurch sichergestellt werden, dass Moduleinschübe parallel zueinander längs einer Einführrichtung in die Modulplattform einführbar sind.

Wie oben bereits gesagt wurde, ist es grundsätzlich denkbar, Werkstücke unmittelbar auf der Transportstrecke zu bearbeiten. Es ist jedoch für die Flexibilität des Bearbeitungsplatzes und der damit verbundenen möglichst effektiven Ausnutzung seiner Bearbeitungskapazität vorteilhaft, wenn der Moduleinschub ein von einer Transportstrecke gesondertes Prozessnest und eine Prozess-Umsetzeinrichtung aufweist, welche dazu ausgebildet ist, ein Werkstück zwischen der ersten Transportstrecke und dem Prozessnest umzusetzen. Hierzu kann also das Werkstück von der ersten Transportstrecke abgenommen und dem Prozessnest zugeführt, dort unabhängig von weiter stattfindenden Transportvorgängen bearbeitet und schließlich wieder auf die erste Transportstrecke zurückgesetzt werden.

Bei dem gerade genannten vorteilhaften Fall ist es für eine Verringerung der Ausricht- und Justierarbeiten zwischen erster Transportstrecke und Prozess-Umsetzeinrichtung vorteilhaft, wenn diese zu einer vormontierten Baugruppe zusammengefasst sind. Dann können wiederum die Justier- und Ausrichtarbeiten zwischen erster Transportstrecke und Prozess-Umsetzeinrichtung unabhängig vom Umrüstvorgang und sogar unabhängig von der Anbringung der Baugruppe am Moduleinschub zu beliebigen geeigneten unkritischen Zeiten vorgenommen werden.

Besonders vorteilhaft ist es dabei, wenn die vormontierte Baugruppe auch das Prozessnest umfasst. Dadurch kann auch die Ausrichtung und die Justierung des Prozessnestes, in welchem abseits von der Transportstrecke die Bearbeitung des Werkstücks erfolgt, zu unkritischen Zeiten während der Arbeitsvorbereitung durchgeführt werden, so dass auch diese Arbeiten den Umrüstvorgang nicht zeitlich belasten.

Schließlich kann weiter vorgesehen sein, dass die vormontierte Baugruppe auch die zweite Transportstrecke umfasst, so dass auch die zweite Transportstrecke vorab in der Baugruppe ausgerichtet und justiert werden kann. Gleiches gilt für die Transportstrecken-Umsetzeinrichtung, die vorteilhafterweise ebenfalls von der vormontierten Baugruppe umfasst ist.

Weiterhin kann gemäß einer vorteilhaften Weiterbildung der vorliegenden Erfindung vorgesehen sein, dass die Umsetzeinrichtungen und Transportstrecken jeweils für sich gesonderte funktionsfähige Einheiten sind, die als solche auf der Baugruppe angeordnet und ausgerichtet werden. Dies hat den Vorteil, dass Funktionseinheiten interne Arbeiten, die lediglich die Umsetzeinrichtungen oder die Transportstrecken betreffen, wiederum unabhängig von der Anbringung der Funktionseinheiten in der Baugruppe ausgeführt werden können.

Grundsätzlich reicht es zur Erfüllung der erfindungsgemäßen Aufgabe aus, wenn der Moduleinschub eine erste fest mit diesem verbundene Transportstrecke umfasst, die zusammen mit dem Moduleinschub in die Modulplattform einführbar und von diesem abnehmbar ist, da sich bereits hierdurch eine definierte Position von Werkstücken am Moduleinschub vorab festlegen lässt.

Besonders vorteilhaft sind jedoch an dem Moduleinschub bereits Bearbeitungs- oder/und Handhabungsgeräte zur Ausführung der gewünschten Bearbeitungs- oder/und Handhabungsvorgänge an dem betreffenden Werkstück vorgesehen. Hierzu kann der Moduleinschub einen Prozessbereich aufweisen, welcher zur Anordnung derartiger Geräte vorgesehen ist. So können der Moduleinschubhersteller den Moduleinschub mit Transportstrecke und ggf. weiteren Transportstrecken und Umsetzeinrichtungen ausliefern, und der jeweilige Kunde den Prozessbereich nutzen, um durch Anordnung individueller Bearbeitungs- oder/und Handhabungsgeräte dort eine jeweils gewünschte Konfiguration des Moduleinschubs zu erhalten. Es kann jedoch auch daran gedacht sein, den Moduleinschub herstellerseitig bereits mit darauf angeordneten Bearbeitungs- oder/und Handhabungsgeräten auszuliefern.

Damit der Moduleinschub für eine Bedienperson ohne weiteres erreichbar ist, kann der Moduleinschub eine für eine Bedienperson zugängliche Bedienerseite aufweisen. Weiterhin ist es vorteilhaft, wenn die Transportvorrichtung zwischen dieser Bedienerseite und dem Prozessbereich vorgesehen ist, da dann eine Bedienperson parallel zu evtl. in dem Prozessbereich vorgesehenen Bearbeitungs- oder/und Handhabungsgeräten manuelle Arbeiten an Werkstücken vornehmen kann, etwa an Werkstücken, die auf der ersten oder der zweiten Transportstrecke transportiert werden.

Für eine möglichst schnelle Versorgung der Moduleinschübe mit Strom sowie zum Datenaustausch ist vorteilhafterweise vorgesehen, dass ein Bauteil aus Moduleinschub und Modulplattform wenigstens einen Elektro-Stecker und das jeweils andere Bauteil wenigstens eine Elektro-Steckbuchse zur Verbindung mit dem wenigstens einen Elektro-Stecker umfasst, um elektrische Energie oder/und elektrische Signale, insbesondere elektrische Statussignale oder/und Steuerbefehle zwischen Moduleinschub und Modulplattform zu übertragen.

Dabei muss die Anzahl an Elektro-Steckbuchsen nicht notwendigerweise der Anzahl an Elektro-Steckern entsprechen. Beispielsweise kann an einem der Bauteile eine große Elektro-Steckbuchse vorgesehen sein, in die eine Mehrzahl von Elektro-Steckern des jeweils anderen Bauteils einsteckbar ist.

Gleiches gilt für eine Versorgung der Moduleinschübe mit Druckluft. Hierzu kann vorgesehen sein, dass ein Bauteil aus Moduleinschub und Modulplattform wenigstens einen Pneumatik-Stecker und das jeweils andere Bauteil wenigstens eine Pneumatik-Steckbuchse zur Verbindung mit dem wenigstens einen Pneumatik-Stecker umfasst, um Druckluft zwischen Moduleinschub und Modulplattform zu übertragen.

Für Wartungs- und Einstellarbeiten am Moduleinschub sowie zur Herstellung einer Verbindung zur Übertragung von elektrischer Energie oder/und elektrischen Signalen oder/und Druckluft ist es vorteilhaft, wenn wenigstens ein Steckverbindungselement: Elektro-Stecker, Elektro-Steckbuchse, Pneumatik-Stecker, Pneumatik-Steckbuchse, über eine flexible Leitung mit dem Moduleinschub verbunden ist. In diesem Fall kann der Moduleinschub aus der Modulplattform herausgezogen werden, so dass er von mehreren Seiten zugänglich ist, ohne dass die elektrische oder/und pneumatische Energieversorgung oder/und eine Signalübertragung zum und vom Moduleinschub unterbrochen werden muss. Darüber hinaus kann durch das Vorsehen von Steckern bzw. Steckbuchsen an flexiblen Leitungen die gewünschte Steckverbindung unabhängig vom Einschieben des Moduleinschubs in die Modulplattform hergestellt werden.

Der signal- und energieübertragungsmäßige Anschluss des Moduleinschubs an die Modulplattform kann noch dadurch weiter vereinfacht werden, dass ein Bauteil aus Moduleinschub und Modulplattform einen Hybridstecker mit wenigstens einem Elektro-Stecker und wenigstens einem Pneumatik-Stecker aufweist, und das jeweils andere Bauteil eine Hybridsteckbuchse mit wenigstens einer Elektro-Steckbuchse und wenigstens einer Pneumatik-Steckbuchse aufweist.

Grundsätzlich reicht es aus, den Moduleinschub zentral mit Druckluft zu versorgen. Es kann nämlich dann am Moduleinschub eine Ventilbaugruppe vorgesehen sein, welche eine Mehrzahl von Pneumatik-Schaltventilen umfasst, wobei die Pneumatik-Schaltventile dann entsprechend der Konfiguration des Moduleinschubs für Bearbeitungs- oder/und Handhabungsaufgaben programmiert bzw. ansteuerbar sind.

Zur Vermeidung einer evtl. Belastung der Bearbeitungs- oder/und Handhabungsgeräte am Moduleinschub mit einer ölhaltigen Abluft aus der Ventilbaugruppe ist es vorteilhaft, wenn zwischen der Ventilbaugruppe und dem Prozessbereich wenigstens eine Transportstrecke angeordnet ist.

Zur Koordination der Vorgänge an einem Bearbeitungsplatz mit mehreren Moduleinschüben oder mehreren Moduleinschubplätzen umfasst vorteilhafterweise die Modulplattform eine zentrale Steuereinrichtung, welche in einem Schaltkasten an der Modulplattform vorgesehen sein kann. Der Bearbeitungsplatz kann derart ausgebildet sein, dass der zentrale Schaltkasten nach Herstellung einer entsprechenden Verbindung zwischen Modulplattform und Moduleinschub entweder unmittelbar mit der Transportvorrichtung und ggf. den Umsetzeinrichtungen kommuniziert oder mit einer eigenen Steuerung des Moduleinschubs für die Transportvorrichtung und die Umsetzeinrichtungen kommuniziert. Weiterhin kann vorgesehen sein, dass der Moduleinschub ein Steuergehäuse zur Aufnahme von Steuereinheiten zur Steuerung der Bearbeitungs- oder/und Handhabungsgeräte aufweist, um einen kompakten Aufbau des Moduleinschubs zu ermöglichen.

Die Transportstrecken: erste oder zweite Transportstrecke, können derart ausgebildet sein, dass eine Transportstrecke ein Transportband oder/und zwei orthogonal zur jeweiligen Transportrichtung mit Abstand von einander angeordnete Transportbänder oder/und ein Transportband und eine orthogonal zur jeweiligen Transportrichtung mit Abstand von diesem angeordnete passive Fördereinrichtung, etwa eine Transportrollenstrecke, aufweist. Insbesondere die Ausbildung der Transportstrecke mit voneinander beabstandeten Transportbändern oder mit Transportband und davon mit Abstand angeordneter passiver Fördereinrichtung ist dazu geeignet, zwischen den Transportbändern oder zwischen einem Transportband und der passiven Fördereinrichtung die oben beschriebene Anhaltevorrichtung anzuordnen.

Zur Erzeugung eines möglichst flexiblen Materialflusses im Bearbeitungsplatz kann, wie oben bereits angedeutet, die Prozess-Umsetzeinrichtung dazu ausgebildet sein, ein Werkstück im Prozessnest derart zu halten, dass ein weiteres Werkstück auf der ersten Transportstrecke das Prozessnest mit dem darin gehaltenen Werkstück passieren kann. Dadurch ist es möglich, Werkstücke im Bearbeitungsplatz parallel oder zumindest quasi-parallel zu bearbeiten oder sogar an einem Bearbeitungsplatz Bearbeitungsvorgänge in unterschiedlichen Moduleinschüben mit unterschiedlichen Taktzeiten zu realisieren.

Konstruktiv kann die Prozess-Umsetzeinrichtung eine Hub-Schwenkvorrichtung umfassen, welche dazu ausgebildet ist, ein Werkstück in einer Position aus erster Transportstrecke und Prozessnest anzuheben und um im Wesentlichen 180° in die jeweils andere dieser Positionen zu verschwenken.

Die Überholfunktion kann dabei derart realisiert sein, dass die Prozess-Umsetzeinrichtung zwei gesondert voneinander betätigbare Hubeinrichtungen, insbesondere Hubkolben, umfasst, von welchen bei unbewegter Prozess-Umsetzeinrichtung die eine Hubeinrichtung einer Position aus der ersten Transportstrecke und dem Prozessnest und die andere Hubeinrichtung der jeweils anderen Position zugeordnet ist.

Vorteilhafterweise werden im Bearbeitungsplatz die zu bearbeitenden Werkstücke in dafür vorgesehenen Werkstückträgern transportiert.

Da die oben beschriebenen Moduleinschübe dem vorstehend beschriebenen Bearbeitungsplatz einen besonderen Wert verleihen, wird auch für die Moduleinschübe Patentschutz nachgesucht.

Die vorliegenden Erfindung wird im Weiteren anhand der beiliegenden Zeichnungen beschrieben werden. Es stellt dar:
- Fig. 1: zeigt ein erstes Ausführungsbeispiel eines Bearbeitungsplatzes,
- Fig. 2: zeigt eine perspektivische Explosionsansicht eines Moduleinschubs von Fig. 1,
- Fig. 3: zeigt eine perspektivische Explosionsansicht einer vormontierten Baugruppe aus Transportvorrichtung, Umsetzern und Prozessnest, an dem Moduleinschub der Fig. 1 und 2,
- Fig. 4-6: zeigen perspektivische Ansichten des Moduleinschubs von Fig. 1 und 2,
- Fig. 7: zeigt eine Draufsicht auf die Transportvorrichtung mit Umsetzern und Prozessnest des Moduleinschubs der Fig. 1, 2 und 4-6,
- Fig. 8: zeigt eine perspektivische Ansicht eines Umsetzers mit Werkstückträger der Baugruppe von Fig. 3,
- Fig. 9: zeigt eine Vorderansicht des Umsetzers von Fig. 8, und
- Fig. 10: zeigt ein zweites Ausführungsbeispiel eines Bearbeitungsplatzes.

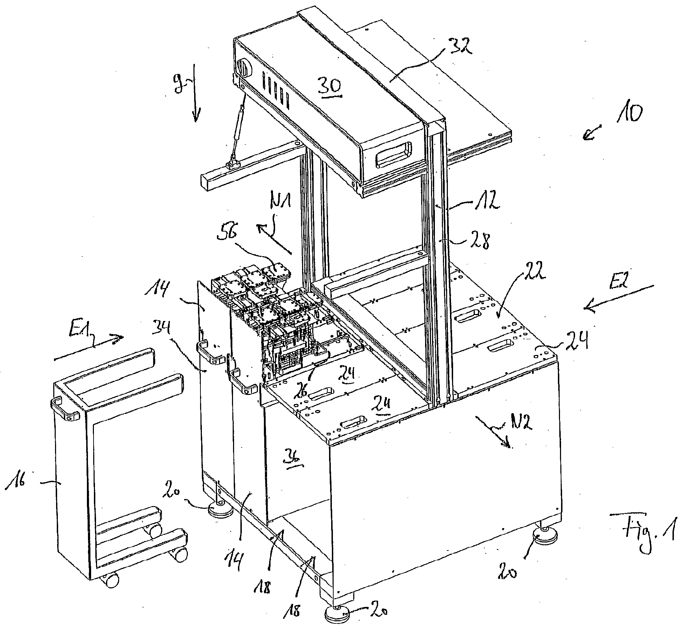

In Fig. 1 ist eine Ansicht eines allgemein mit 10 bezeichneten Bearbeitungsplatzes gezeigt.

Der Bearbeitungsplatz 10, welcher Bestandteil einer nicht dargestellten Bearbeitungsstraße sein kann, dient zur Bearbeitung und Handhabung von Werkstücken, beispielsweise zur Montage von Kleingeräten, wie etwa Bohrmaschinengetrieben und ähnlichem. Der Bearbeitungsplatz 10 umfasst ein Gerüst 12, welches als eine Modulplattform dient, in die Moduleinschübe 14 längs einer ersten Einführrichtung E1 einschiebbar sind. Hierzu wird ein Moduleinschub 14 mit einem Hilfswagen 16 vor die gewünschte Modulaufnahme 18 gestellt und dann längs der ersten Einführrichtung E1 in die Modulplattform 12 eingeschoben.

Die Modulplattform 12 ist derart aufgebaut, dass vier Moduleinschübe 14 nebeneinander längs der ersten Einführrichtung E1 in die Modulplattform einschiebbar sind und dass vier weitere Moduleinschübe auf der gegenüberliegenden Seite der Modulplattform 12 längs einer zweiten Einführrichtung E2 in die Modulplattform einschiebbar sind. Die Einführrichtungen E1 und E2 sind einander entgegengesetzt.

Die Modulplattform 12 ruht auf höhenverstellbaren Füßen 20, so dass eine Grundfläche 22 der Modulplattform bezüglich der Schwerkraftwirkungsrichtung g ausgerichtet werden kann, vorzugsweise derart, dass die Grundfläche 22 "im Wasser" ist.

Die Grundfläche 22 ist gebildet aus insgesamt acht ebenen Grundplatten 24, welche alle eine gemeinsame Auflageebene bilden. Jede Grundplatte 24 ist dabei einer Modulaufnahme 18 zugeordnet.

Die Moduleinschübe 14 umfassen Modul-Grundplatten 26, welche dann, wenn der Moduleinschub 14 in die Modulplattform 12 eingeschoben ist, im Wesentlichen flächig auf der Grundplatte 24 aufliegen.

Die Modulplattform 12 weist an einem die Grundfläche 22 überragenden Obergestell 28 einen Schaltkasten 30 auf, welcher eine Steuer/Regeleinrichtung umfasst, die mit den Moduleinschüben 14 kommuniziert, wenn diese in die Modulplattform 12 eingeschoben sind. Darüber hinaus ist ein über die Breite der Modulplattform 12 reichender Kabelkanal 32 vorgesehen, in welchem Versorgungs- und Datenübertragungsleitungen für eine Bearbeitungsstraße angeordnet werden können.

In Richtung der Pfeile N1 und N2 neben dem Bearbeitungsplatz 10 können weitere gleichartige oder ähnliche Bearbeitungsplätze zur Bildung einer Bearbeitungsstraße vorgesehen sein.

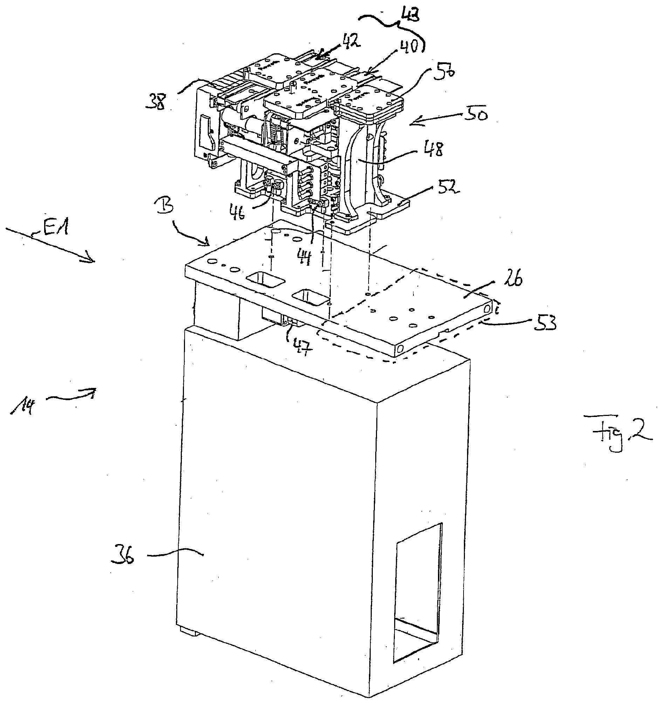

In Fig. 2 ist eine perspektivische Explosionszeichnung des Moduleinschubs 14 dargestellt, wobei die bedienerseitige Platte 34 (s. Fig. 1) der Übersichtlichkeit halber weggelassen ist.

Der Moduleinschub 14 umfasst ein Steuergehäuse 36, in welches Steuer/Regeleinheiten aufgenommen werden können, welche zur Steuerung von nicht dargestellten Bearbeitungs- oder/und Handhabungsgeräten ausgebildet sein können, die auf der Modul-Grundplatte 26 angeordnet sein können. Die in dem Steuergehäuse 36 vorgesehenen Steuer/Regeleinheiten können auch zur Ansteuerung von einer an dem Moduleinschub 14 vorgesehenen Ventilinsel 38, einer ersten Transportstrecke 40, einer zweiten Transportstrecke 42 sowie zur Steuerung einer Prozess-Umsetzeinrichtung 44 und einer Transportstrecken-Umsetzeinrichtung 46 ausgebildet sein. Die Steuer/Regeleinheiten können mit dem Schaltkasten 30 und der darin vorgesehenen Steuer/Regeleinrichtung über einen Hybridstecker 47 verbunden sein, weicher dann, wenn der Moduleinschub 14 in die Modulplattform 12 eingeschoben ist, in eine an der Modulplattform 12 vorgesehene, nicht dargestellte Hybridsteckbuchse eingeschoben ist. Der Hybridstecker 47 umfasst einen oder mehrere Elektro-Stecker und einen oder mehrere Pneumatik-Stecker. Ebenso umfasst die Hybridsteckbuchse eine oder mehrere Elektro-Steckbuchsen und eine oder mehrere Pneumatik-Steckbuchsen. Die Ventilinsel 38, die Transportstrecken 40, 42 und die Umsetzeinrichtungen 44, 46 können alternativ über einen Hybrid- oder Elektro-Stecker ohne Zwischenanordnung einer Steuer/Regeleinheit im Steuergehäuse 36 auch unmittelbar mit der Steuer/Regeleinrichtung im Schaltkasten 30 verbunden sein.

Der Pneumatik-Stecker des Hybridsteckers 47 bildet beim Einschieben des Moduleinschubs 14 in die Modulplattform 12 eine Steckverbindung mit einer in der Hybridsteckbuchse der Modulplattform 12 vorgesehenen Pneumatik-Steckbuchse, um Druckluft bis zur Ventilinsel 38 zu übertragen. Dort kann die Druckluft je nach Ansteuerung der in der Ventilinsel 38 angeordneten Pneumatik-Schaltventile selektiv weitergeleitet werden.

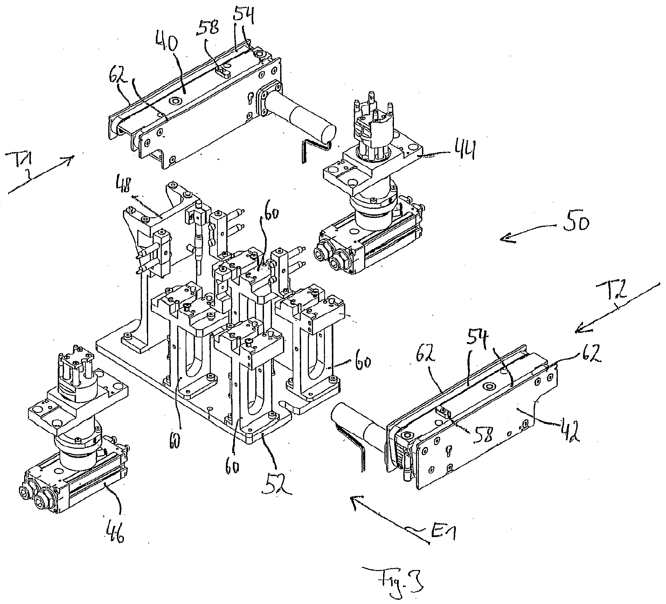

Die Ventilinsel 38, die Transportstrecken 40 und 42, die Umsetzer 44 und 46 (s. auch Fig. 3) sowie ein Prozessnest 48 sind als vormontierte Baugruppe 50 auf die Modul-Grundplatte 26 montiert. Die vormontierte Baugruppe 50 umfässt hierzu eine gemeinsame Baugruppen-Grundplatte 52, welche die Komponenten der vormontierten Baugruppe 50 trägt.

Die vormontierte Baugruppe 50 ist dabei derart auf die Modul-Grundplatte 52 montiert, dass die Ventilinsel 38 näher an der Bedienerseite B des Moduleinschubs 14 gelegen ist. Dadurch kann vermieden werden, dass evtl. ölhaltige Abluft aus den Pneumatik-Schaltventilen der Ventilinsel 38 zu Bearbeitungs- oder/und Handhabungsgeräten gelangt, die in Einführrichtung E1 hinter dem Prozessnest 48 anordenbar sind. Zu deren Anordnung ist auf der Modul-Grundplatte 26 ein strichliniert angedeuteter Prozessbereich 53 reserviert. Zur Erleichterung der Anordnung von entsprechenden Bearbeitungs- oder/und Handhabungsgeräten können Bohrungen oder/und Löcher oder/und Nuten in der Modul-Grundplatte 26 vorgesehen sein.

In Fig. 3 ist die vormontierte Baugruppe 50 in einer Explosionsansicht gezeigt. Die Ventilinsel 38 ist in der Ansicht der Fig. 3 weggelassen.

Die erste Transportstrecke 40 und die zweite Transportstrecke 42, welche im dargestellten Beispiel eine Teil-Transportvorrichtung 43 bilden, sind im Wesentlichen identisch aufgebaut und sind aus einer Doppelgurtfördereinrichtung gebildet. Hierzu umfasst die auch stellvertretend für die erste Transportstrecke 40 beschriebene zweite Transportstrecke 42 zwei mit Abstand voneinander verlaufende parallel angeordnete Gurtförderbänder 54. Die zweite Transportstrecke 42 ist dazu vorgesehen, Werkstückträger 56 (s. Fig. 1 oder 2) längs einer zweiten Transportrichtung T2 zu bewegen. Dementsprechend ist die erste Transportstrecke 40 dazu ausgebildet, Werkstückträger in die entgegengesetzte erste Transportrichtung T1 zu fördern.

Die zweite Transportstrecke 42 umfasst ebenso wie die erste Transportstrecke 40 einen selektiv zwischen einer Haltestellung und einer Durchlassstellung verstellbaren Anschlag 58, welcher im ausgefahrenen Zustand als Anschlag für auf den Transportstrecken 40 und 42 beförderte Werkstückträger dient und im eingefahrenen Zustand von diesen Werkstückträgern überfahren wird.

Wie das Prozessnest 48 sind verschiedene Einzelträger 60 auf die Baugruppen-Grundplatte 42 aufgeschraubt. Die Träger 60 dienen zur Aufnahme der Transportstrecken 40 und 42 und der Umsetzer 44 und 46. Gemäß einer nicht dargestellten vorteilhaften Weiterbildung der vorliegenden Erfindung können die vier Einzelträger 60 auch zu einer integralen Trägeranordnung zusammengefasst sein.

Durch die in Fig. 3 gezeigte Anordnung können die Transportstrecken 40 und 42, die Umsetzer 44 und 46 sowie das Prozessnest 48 ideal zueinander ausgerichtet werden, bevor der die Baugruppe 50 aufnehmende Moduleinschub 14 in eine Modulplattform 12 eingeschoben wird.

Der in Fig. 3 gezeigte Umsetzer 46 ist ein Transportstrecken-Umsetzer, welcher dazu ausgebildet ist, Werkstückträger von der ersten Transportstrecke 40 zur zweiten Transportstrecke 42 umzusetzen und umgekehrt. Hierzu hebt der Umsetzer 46 den Werkstückträger auf einer Transportstrecke an, bis der Werkstückträger außer Eingriff mit den Führungsleisten 62 der Transportstrecken 40 und 42 gelangt. Dann verschwenkt der Umsetzer 46 den Werkstückträger um 180° und setzt ihn zwischen den Führungsleisten 62 der jeweils anderen Transportstrecke ab. Daraus folgt, dass die Transportstrecken 40 und 42 in einem von der Größe des Werkstückträgers 56 bestimmten Abstand voneinander angeordnet ist, wobei die Drehachse des Umsetzers 46 in der Mitte mit gleichem Abstand von den Transportstrecken 40 und 42 angeordnet ist.

Der Umsetzer 44 ist dagegen ein Prozess-Umsetzer, welcher dazu ausgebildet ist, Werkstückträger von der ersten Transportstrecke 40 zum Prozessnest 48 umzusetzen und umgekehrt. Hierdurch kann ein Werkstückträger von der Transportstrecke entnommen und unabhängig von Transportvorgängen auf der ersten Transportstrecke am Prozessnest 48 durch Bearbeitungs- oder/und Handhabungsgeräte bearbeitet werden.

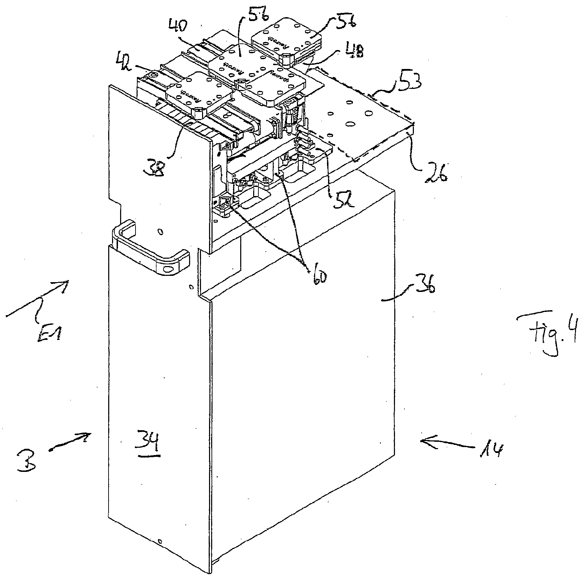

In Fig. 4 ist der Moduleinschub 14 aus einer anderen Perspektive betrachtet dargestellt.

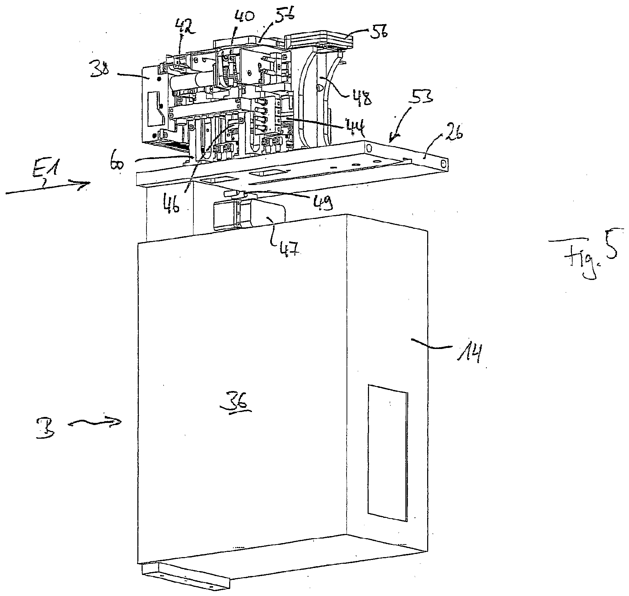

Eine weitere perspektivische Ansicht des Moduleinschubs 14 ohne die bedienerseitige Platte 34 ist in Fig. 5 gezeigt. Dort ist auch eine Sicherungsschraube 49 gezeigt, mit welcher der Moduleinschub 14 an der Modulplattform gesichert werden kann.

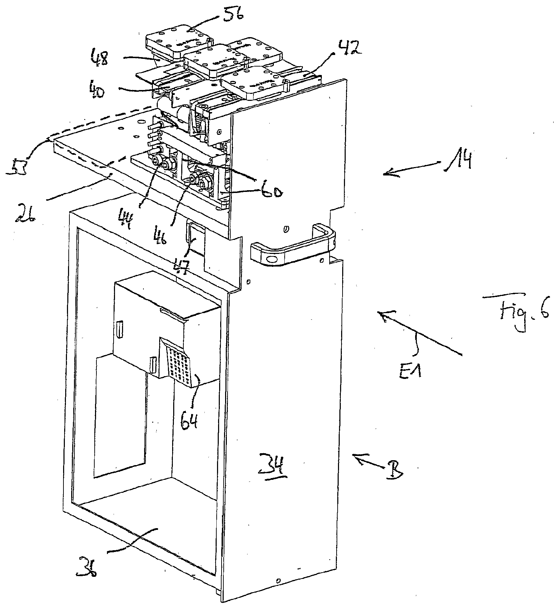

In Fig. 6 ist der Moduleinschub 14 aus noch einer weiteren Perspektive dargestellt, wobei das Steuergehäuse 36 offen dargestellt ist und eine darin vorgesehene Steuer/Regeleinheit 64 zu erkennen ist, welche zur Steuerung von Bearbeitungs- oder/und Handhabungsgeräten vorbereitet ist, die noch in dem Prozessbereich 53 anzuordnen sind.

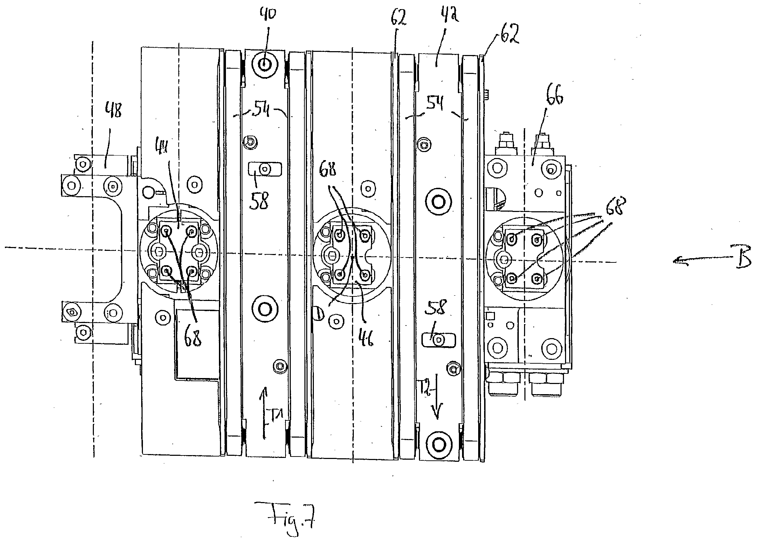

In Fig. 7 ist eine Draufsicht auf die erste und die zweite Transportstrecke 40, 42, die Prozess-Umsetzeinrichtung 44, die Transportstrecken-Umsetzeinrichtung 46 und das Prozessnest 48 dargestellt. Weiterhin ist eine dritte Umsetzeinrichtung 66 dargestellt, welche einen nicht dargestellten Werkstückträger von der zweiten Transportstrecke 42 zu der von dem Prozessnest 48 wegweisenden Seite, d.h. zur Bedienerseite B hin, verschwenken kann. Jede der Umsetzeinrichtungen 44, 46, 66 weist insgesamt vier Fangstifte 68 auf, welche zum Umsetzen eines Werkstückträgers in diesen eingreifen. Die Stifte 68 sind im Wesentlichen gleichartig und sind nur unterschiedlich orientiert an den jeweiligen Umsetzeinrichtungen angeordnet.

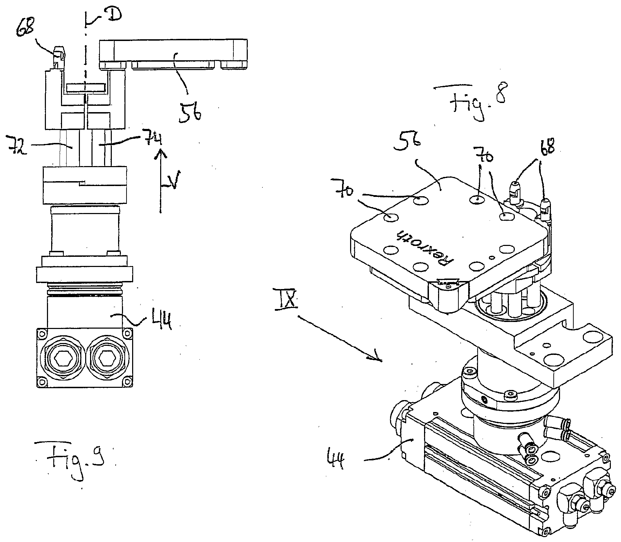

Zum Umsetzen eines Werkstückträgers greifen jeweils nur zwei von vier Stiften 68 einer Umsetzeinrichtung in entsprechende Ausnehmungen 70 (s. Fig. 8) des Werkstückträgers 56 ein. Dabei bilden stets in Transportrichtung T1 und T2 mit Abstand voneinander angeordnete Stifte 68 derartige Eingriffspaare. Die Drehachse der Transportstrecken-Umsetzeinrichtung 46 ist in Fig. 7 mit D bezeichnet. Sie ist orthogonal zur Zeichenebene der Fig. 7. Die Drehachse D hat den gleichen Abstand zur ersten Transportstrecke 40 wie zur zweiten Transportstrecke 42. Ein von den Transportstrecken 40 und 42 bewegter Werkstückträger muss zumindest so breit sein, dass die der jeweiligen Transportstrecke, auf welcher der Werkstückträger bewegt wird, näher liegenden Stiftepaare der Stifte 68 in diesen eingreifen können. Damit wahlweise der Werkstückträger 56 sowohl von der Transportstrecken-Umsetzeinrichtung 46 wie auch von der Prozess-Umsetzeinrichtung 44 oder der dritten Umsetzeinrichtung 46 erfasst werden kann (je nachdem, auf welcher Transportstrecke er sich befindet), ragt der Werkstückträger vorzugsweise zu beiden Seiten der Transportstrecken 40 und 42 ein entsprechendes Maß über die Transportstrecken hinaus.

So, wie sich die Transportstrecken-Umsetzeinrichtung 46 in der Mitte zwischen der ersten und der zweiten Transportstrecke 40 bzw. 42 befindet, ist die Prozess-Umsetzeinrichtung 44 in der Mitte des Abstands angeordnet, welchen das Prozessnest 48 von der ersten Transportstrecke 40 hat.

Damit es auf die Orientierung eines Werkstückträgers 56 auf den Transportstrecken 40, 42 nicht ankommt, werden vorzugsweise im Wesentlichen symmetrische Werkstückträger 56 mit quadratischer Grundfläche verwendet, welche auf jeder Seite Ausnehmungen 70 zum Eingriff der Stifte 68 aufweisen.

Es wird darauf hingewiesen, dass die Drehachsen D aller Umsetzeinrichtungen 44, 46 und 66 in Fig. 7 mit gleichem Abstand zur jeweils nächstliegenden zugeordneten Transportstrecke angeordnet sind.

In Fig. 8 ist die Prozess-Umsetzeinrichtung 44 in der Perspektive dargestellt. Die Prozess-Umsetzeinrichtung 44 in Fig. 8 befindet sich im Eingriff mit dem Werkstückträger 56 mit im Wesentlichen quadratischer Grundfläche. Zu erkennen sind die Ausnehmungen 70 zum Eingriff mit den Stiften 68 der Prozess-Umsetzeinrichtung 44.

In Fig. 9 ist eine Vorderansicht längs des Pfeiles IX aus Fig. 8 der Prozess-Umsetzeinrichtung 44 dargestellt.

Bei den im dargestellten Beispiel verwendeten Umsetzeinrichtungen 44, 46 und 66 handelt es sich um sogenannte Hub-Dreh-Einheiten, welche nach Ineingriffnahme eines Werkstückträgers 56 diesen in Richtung des Pfeils V längs ihrer Drehachse D anheben und um 180° um diese Drehachse D verschwenken. Zum Anheben von Werkstückträgern 56 weist die Prozess-Umsetzeinrichtung 44 zwei gesondert voneinander betätigbare Hubsysteme 72 und 74 auf, wodurch sichergestellt ist, dass ein im Prozessnest 48 aufgenommener Werkstückträger von einer der Hubeinrichtungen 72 oder 74 ergriffen und angehoben werden kann, ohne dass die jeweils andere Hubeinrichtung mit angehoben wird und somit in den Bewegungsweg eines längs der ersten Transportstrecke 40 bewegten Werkstückträgers ragt. Hierdurch wird sichergestellt, dass die Transportfunktion der Transportstrecke 40 erhalten bleibt, unabhängig davon, ob sich im Prozessnest 48 ein Werkstückträger befindet oder nicht. Hierdurch können Werkstückträger aus der Transportstrecke 40 einen im Prozessnest 48 aufgenommenen Werkstückträger passieren.

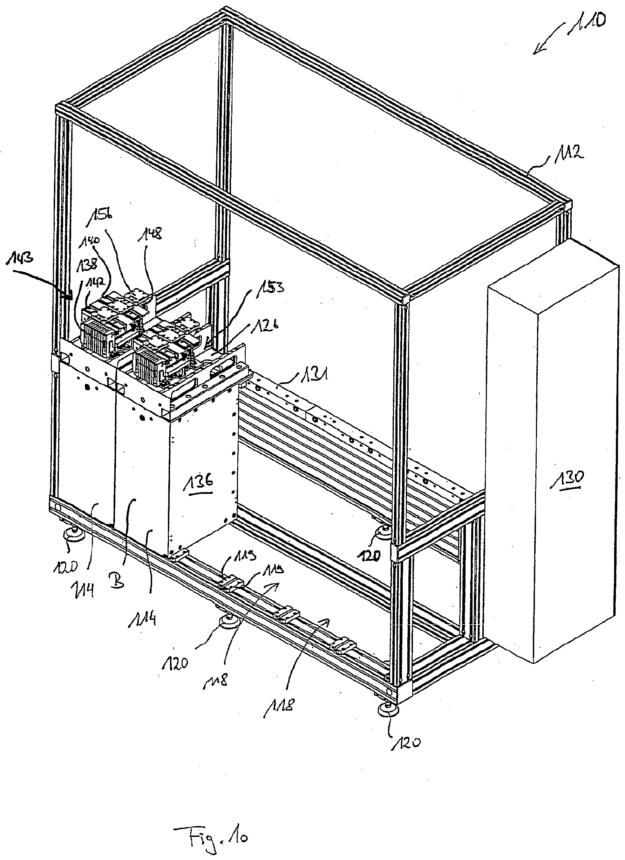

In Fig. 10 ist eine Darstellung eines zweiten Ausführungsbeispiels eines Bearbeitungsplatzes dargestellt. Gleiche Bauteile wie in den vorhergehenden Figuren 1 bis 9 sind mit gleichen Bezugszeichen versehen, jedoch erhöht um die Zahl 100. Zur Beschreibung dieser Bauteile wird ausdrücklich auf deren Erläuterung im Zusammenhang mit den Figuren 1 bis 9 verwiesen. Das in Fig. 10 dargestellte Ausführungsbeispiel wird im Folgenden nur insoweit beschrieben werden, als es sich von dem in den Figuren 1 bis 9 dargestellten ersten Ausführungsbeispiel unterscheidet.

Die Ansicht des in Fig. 10 gezeigten Bearbeitungsplatzes 110 ist jener des ersten Ausführungsbeispiels eines Bearbeitungsplatzes 10 von Fig. 1 ähnlich.

Das Gerüst 112, welches die Modulplattform bildet, ist als Rahmenkonstruktion aus Strangpressprofilen gebildet.

Im Gegensatz zu dem ersten Ausführungsbeispiel eines Bearbeitungsplatzes weist die Modulplattform 12 des zweiten Ausführungsbepiels keine aus Grundplatten zusammengesetzte Grundfläche auf. Vielmehr bilden bei den Moduleinschüben 114. die jeweiligen Modul-Grundplatten 126 einen Deckel des Steuergehäuses 136 des Moduleinschubs 114. Dies bedeutet, die Modul-Grundplatte 126 bildet eine das Steuergehäuse 136 begrenzende Wand.

Die Modul-Grundplatten 126 bilden somit eine gemeinsame Grundfläche, die die einzige Grundfläche dieses Bearbeitungsplatzes 110 ist. Es wird ausdrücklich darauf hingewiesen, dass der Bearbeitungsplatz 110 des zweiten Ausführungsbeispiels in der in Fig. 10 gezeigten Ausführung bis zu zwölf Moduleinschübe 114 aufnehmen kann, so dass der Bearbeitungsplatz 110 von Fig. 10 in Fällen von nur wenigen benötigten Arbeitsvorgängen eine in sich geschlossene Bearbeitungsanlage bilden kann, bei welcher sich keine weiteren Modulplattformen seitlich anschließen. Aus diesem Grunde kann der Schaltkasten 130 ah der Seite der Mödulplattform 112 angeordnet sein. Eine ähnliche Anordnung des Schaltkastens kann auch dann verwirklicht sein, wenn sich weitere Bearbeitungsplätze nur an einer Seite des Bearbeitungsplatzes 110 anschließen, beispielsweise wenn eine Bearbeitungsstraße aus zwei Bearbeitungsplätzen gebildet ist.

Die in Fig. 10 dargestellten Moduleinschübe 114 weisen ebenfalls einen Elektro-Stecker oder eine Elektro-Steckbuchse oder/und einen Pneumatik-Stecker oder eine Pneumatik-Steckbuchse auf, jedoch sind diese Steckverbindungen nicht starr an dem Moduleinschub 114 vorgesehen, sondern durch entsprechende Elektro- oder/und Pneumatik-Leitungen mit dem Moduleinschub 114 verbunden. Durch das Vorsehen der Elektro- und Pneumatik-Steckverbindung am Ende einer mit dem Moduleinschub 114 verbundenen Leitung kann der Moduleinschub 114 in vorteilhafter Weise aus seiner Modulaufnahme 118 an der Modulplattform 112 herausgezogen werden, ohne dass seine Versorgung mit elektrischem Strom oder/und mit Druckluft unterbrochen werden müsste. Dies erleichtert Wartungs- und Einstellarbeiten an den jeweiligen Moduleinschüben 114 erheblich. Außerdem kann der Moduleinschub 114, falls dies gewünscht ist, in die Modulplattform 112 eingeschoben werden, ohne dass zwangsweise eine Energie- oder/und Signalübertragungsverbindung erfolgt.

Gegebenenfalls kann ein Moduleinschub 114 je nach seiner Funktionsausbildung mehrere Leitungen mit Elektro- oder/und Pneumatik-Steckverbindungsanschlüssen aufweisen. Die Leitungen sind daher modulspezifisch vorgesehen.

In Fig. 10 ist die Positionierungsleiste 131 zu erkennen, welche Ausnehmungen aufweist, in die Positionierstifte am Moduleinschub eingreifen. Damit unterschiedlich breite Moduleinschübe am Bearbeitungsplatz 110 einsetzbar sind, weist die Positionierungsleiste 131 eine Vielzahl von Ausnehmungen in einem engen Raster auf. Die Positionierungsleiste 131 kann außerdem als Versorgungsleiste ausgestaltet sein, welche die entsprechenden Steckbuchsen aufweist, in die die Stecker an den Leitungsenden der Moduleinschübe 114 zur Versorgung der Moduleinschübe 114 mit elektrischem Strom und Druckluft eingesteckt werden können.

"Steckverbindung" im Sinne der vorliegenden Anmeldung soll bedeuten, dass eine leitende Verbindung auf sehr einfach Art und Weise erzeugt werden kann, beispielsweise durch eine Steckbewegung, wobei nicht ausgeschlossen sein soll, dass nach dem Herstellen der Steckverbindung eine weitere Relativbewegung von Stecker und Steckbuchse zur Sicherung bzw. zum Lösen der Steckverbindung erfolgt.

Die Modulaufnahmen 118 sind bei dem in Fig. 10 dargestellten Ausführungsbeispiel durch in Längsnuten der Strangpressprofile verschiebbare Begrenzungssteine 119 markiert. Durch Verschieben dieser Begrenzungssteine 119 kann die Modulaufnahme 118 zur Aufnahme von Moduleinschüben 114 unterschiedlicher Breite angepasst werden.

Wie in den Fig. 1 und 10 zu erkennen ist, bilden die Teil-Transportvorrichtungen 43 bzw. 143 der einzelnen Moduleinschübe 14 bzw. 114 gemeinsam die Transportvorrichtung des gesamten Bearbeitungsplatzes 10 bzw. 110.

Zur Bildung einer Bearbeitungsstraße können selbstverständlich die Bearbeitungsplätze des ersten und des zweiten Ausführungsbeispiels kombiniert werden.

## Patentansprüche

1. Moduleinschub (14; 114) der mit einer Teil-Transportvorrichtung (43; 143) fest verbunden ist und gemeinsam mit dieser in eine Modulplattform (12; 112) einer Bearbeitungsstraße einführbar ist, wobei die Teil-Transportvorrichtung (43; 143) eine erste Transportstrecke (40; 140) aufweist, welche zum Transport eines Werkstücks (56; 156) im Wesentlichen über die Breite des Moduleinschubs (14; 114) in einer ersten Transportrichtung (T1) ausgebildet ist, so dass die Teil-Transportvornchtungen (43; 143) aller Moduleinschübe (14; 114), die in die Modulplattforum (12; 112) eingesetzt sind, eine Transportvorrichtung für an der Bearbeitungsstraße zu bearbeitende Werkstücke bilden,
wobei der Moduleinschub (14; 114) einen Prozessbereich (53; 153) aufweist, in welchem Bearbeitungs- oder/und Handhabungsgeräte anordenbar sind und wobei der Moduleinschub (14; 114) eine Prozess-Umsetzvorrichtung (44) zum Umsetzen der Werkstücke (56, 156) aufweist,
**dadurch gekennzeichnet, dass** auf dem Moduleinschub (14; 114) ein Prozessnest (48, 148) vorgesehen ist, wobei die Prozess-Umsetzeinrichtung (44) dazu ausgebildet ist, ein Werkstück (56; 156) zwischen der ersten Transportstrecke (40; 140) und dem Prozessnest (48; 148) umzusetzen und wobei die erste Transportstrecke (40; 140) und die Prozess-Umsetzeinrichtung (44) zu einer von dem Prozessbereich (53; 153) gesonderten vormontierten Baugruppe (50) zusammengefasst sind.

2. Moduleinschub nach Anspruch 1,
**dadurch gekennzeichnet, dass** die vormontierte Baugruppe (50) auch das Prozessnest (48; 148) umfasst.

3. Moduleinschub nach Anspruch 1,
**dadurch gekennzeichnet, dass** die Teil-Transportvorrichtung (43; 143) eine zweite Transportstrecke (42; 142) zum Transport eines Werkstücks (56; 156) in eine zweite, der ersten entgegen gesetzte Transportrichtung (T2) umfasst, wobei die vormontierte Baugruppe (50) auch die zweite Transportstrecke (42; 142) umfasst.

4. Moduleinschub nach Anspruch 3,
**dadurch gekennzeichnet, dass** der Moduleinschub (14; 114) eine Transportstrecken-Umsetzeinrichtung (46; 146) zum Umsetzen von Werkstücken (56; 156) zwischen der ersten und der zweiten Transportstrecke (40, 42; 140, 142) umfasst,
wobei die vormontierte Baugruppe (50) auch die Transportstrecken-Umsetzeinrichtung (46) umfasst.

5. Moduleinschub nach einem der vorstehenden Ansprüche,
**dadurch gekennzeichnet, dass** der Moduleinschub (14; 114) eine für eine Bedienperson zugängliche Bedienerseite (B) aufweist und die Transportvorrichtung (40, 42; 140, 142) zwischen Bedienerseite (B) und dem Prozessbereich (53; 153) vorgesehen ist.

6. Moduleinschub nach einem der vorhergehenden Ansprüche,
**dadurch gekennzeichnet, dass** ein Bauteil aus Moduleinschub (14; 114) und Modulplattform (12; 112) wenigstens einen Elektro-Stecker und das jeweils andere Bauteil wenigstens eine Elektro-Steckbuchse zur Verbindung mit dem wenigstens einen Elektro-Stecker umfasst, um elektrische Energie oder/und elektrische Signale, insbesondere elektrische Statussignale oder/und Steuerbefehle zwischen Moduleinschub (14; 114) und Modulplattform (12; 112), zu übertragen.

7. Moduleinschub nach einem der vorhergehenden Ansprüche,
**dadurch gekennzeichnet, dass** ein Bauteil aus Moduleinschub (14; 114) und Modulplattform (12; 112) wenigstens einen Pneumatik-Stecker und das jeweils andere Bauteil wenigstens eine Pneumatik-Steckbuchse zur Verbindung mit dem wenigstens einen Pneumatik-Stecker umfasst, um Druckluft zwischen Moduleinschub (14; 114) und Modulplattform (12; 112) zu übertragen.

8. Moduleinschub nach Anspruch 6 oder 7,
**dadurch gekennzeichnet, dass** wenigstens ein Steckverbindungselement, Elektro-Stecker, Elektro-Steckbuchse, Pneumatik-Stecker, Pneumatik-Steckbuchse, über eine flexible Leitung mit dem Moduleinschub (114) verbunden ist.

9. Moduleinschub nach den Ansprüchen 6 und 7, gegebenenfalls unter Einbeziehung des Anspruchs 8,
**dadurch gekennzeichnet, dass** ein Bauteil aus Moduleinschub (14; 114) und Modulplattform (12; 112) einen Hybridstecker (47) mit wenigstens einem Elektro-Stecker und wenigstens einem Pneumatik-Stecker aufweist, und das jeweils andere Bauteil eine Hybridsteckbuchse mit wenigstens einer Elektro-Steckbuchse und wenigstens einer Pneumatik-Steckbuchse aufweist.

10. Moduleinschub nach einem der vorhergehenden Ansprüche,
**dadurch gekennzeichnet, dass** der Moduleinschub (14; 114) eine Ventilbaugruppe (38; 138) mit einer Mehrzahl von Pneumatik-Schaltventilen umfasst,
wobei zwischen der Ventilbaugruppe (38; 138) und dem Prozessbereich (53; 153) wenigstens eine Transportstrecke (40, 42; 140, 142) angeordnet ist.

11. Moduleinschub nach einem der vorhergehenden Ansprüche, gegebenenfalls unter Einbeziehung des Anspruchs 3,
**dadurch gekennzeichnet, dass** eine Transportstrecke (40, 42; 140, 142) ein Transportband oder/und zwei orthogonal zur jeweiligen Transportrichtung mit Abstand von einander angeordnete Transportbänder (54) oder/und ein Transportband und eine orthogonal zur jeweiligen Transportrichtung mit Abstand von diesem angeordnete passive Fördereinrichtung, etwa eine Transportrollenstrecke, aufweist.

12. Moduleinschub nach einem der vorstehenden Ansprüche,
**dadurch gekennzeichnet, dass** die Prozess-Umsetzeinrichtung (44) dazu ausgebildet ist, ein Werkstück (56; 156) im Prozessnest (48; 148) derart zu halten, dass ein weiteres Werkstück auf der ersten Transportstrecke (40; 140) das Prozessnest (48; 148) mit dem darin gehaltenen Werkstück passieren kann.

13. Moduleinschub nach Anspruch 12,
**dadurch gekennzeichnet, dass** die Prozess-Umsetzeinrichtung (44) eine Hub/Schwenkvornchtung umfasst, welche dazu ausgebildet ist, ein Werkstück (56; 156) in einer Position aus erster Transportstrecke (40; 140) und Prozessnest (48; 148) anzuheben und um im Wesentlichen 180° in die jeweils andere dieser Positionen zu verschwenken.

14. Moduleinschub nach Anspruch 13,
**dadurch gekennzeichnet, dass** die Prozess-Umsetzeinrichtung (44) zwei gesondert voneinander betätigbare Hubeinrichtungen (72, 74), insbesondere Hubkolben, umfasst, von welchen bei unbewegter Prozess-Umsetzeinrichtung (44) die eine Hubeinrichtung (72 oder 74) einer Position aus der ersten Transportstrecke (40) und dem Prozessnest (48) und die andere Hubeinrichtung (74 oder 72) der jeweils anderen Position zugeordnet ist.

15. Moduleinschub nach einem der vorhergehenden Ansprüche,
**dadurch gekennzeichnet, dass** die Modulplattform (112) Modulaufnahmen (118) veränderlicher Abmessung, insbesondere veränderlicher Breite, aufweist.

## Claims

1. Modular insert (14; 114) which is fixedly connected to a part-transportation device (43; 143) and conjointly with the latter is insertable into a module platform (12; 112) of a processing line, wherein the part-transportation device (43; 143) has a first transportation section (40; 140) which, for transporting a workpiece (56; 156), in a first transportation direction (T1) is configured substantially across the width of the modular insert (14; 114) such that the part-transportation devices (43; 143) of all modular inserts (14; 114) that are inserted into the module platform (12; 112) form a transportation device for workpieces that are to be processed in the processing line,
wherein the modular insert (14; 114) has a process region (53; 153) in which processing or/and handling apparatuses are disposable,
and wherein the modular insert (14; 114) has a process-transfer device (44) for transferring the workpieces (56; 156), **characterized in that** a process nest (48; 148) is provided on the modular insert (14; 114), wherein the process-transfer installation (44) is configured for transferring a workpiece (56; 156) between the first transportation section (40; 140) and the process nest (48; 148), and wherein the first transportation section (40; 140) and the process-transfer installation (44) are combined to form a pre-assembled functional group (50) that is separate from the process region (53; 153).

2. Modular insert according to Claim 1,
**characterized in that** the pre-assembled functional group (50) also comprises the process nest (48; 148).

3. Modular insert according to Claim 1,
**characterized in that** the part-transportation device (43; 143) comprises a second transportation section (42; 142) for transporting a workpiece (56; 156) in a second transportation direction (T2) that is counter to the first transportation direction (T2), wherein the pre-assembled functional group (50) also comprises the second transportation section (42; 142).

4. Modular insert according to Claim 3,
**characterized in that** the modular insert (14; 114) comprises a transportation-section transfer installation (46; 146) for transferring workpieces (56; 156) between the first and the second transportation section (40, 42; 140, 142),
wherein the pre-assembled functional group (50) also comprises the transportation-section transfer installation (46).

5. Modular insert according to one of the preceding claims,
**characterized in that** the modular insert (14; 114) has an operator side (B), accessible to an operator, and the transportation device (40, 42; 140, 142) is provided between the operator side (B) and the process region (53; 153).

6. Modular insert according to one of the preceding claims,
**characterized in that** a component comprising modular insert (14; 114) and module platform (12; 112) comprises at least one electric plug, and the respective other component comprises at least one electric plug socket for connection to the at least one electric plug, so as to transmit electric power or/and electric signals, in particular electric status signals or/and control commands between modular insert (14; 114) and module platform (12; 112).

7. Modular insert according to one of the preceding claims,
**characterized in that** a component comprising modular insert (14; 114) and module platform (12; 112) comprises at least one pneumatic plug, and the respective other component comprises at least one pneumatic plug socket for connection to the at least one pneumatic plug, so as to transmit compressed air between the modular insert (14; 114) and the module platform (12; 112).

8. Modular insert according to Claim 6 or 7,
**characterized in that** at least one plug-connection element, that is to say at least one of electric plug, electric plug socket, pneumatic plug, pneumatic plug socket, is connected to the modular insert (114) by way of a flexible line.

9. Modular insert according to Claims 6 and 7, optionally incorporating Claim 8,
**characterized in that** a component of one of the modular insert (14; 114) and the module platform (12; 112) has a hybrid plug (47) having at least one electric plug and at least one pneumatic plug, and the respective other component has hybrid plug socket having at least one electric plug socket and at least one pneumatic plug socket.

10. Modular insert according to one of the preceding claims,
**characterized in that** the modular insert (14; 114) comprises a valve block (38; 138) having a plurality of pneumatic switching valves,
wherein at least one transportation section (40, 42; 140, 142) is disposed between the valve block (38; 138) and the process region (53; 153).

11. Modular insert according to one of the preceding claims, optionally incorporating Claim 3,
**characterized in that** a transportation section (40, 42; 140, 142) has a transportation belt or/and two transportation belts (54) that are disposed so as to be mutually spaced apart and orthogonal to the respective transportation direction or/and a transportation belt and a passive conveying installation, such as a roller conveyor section, that is disposed so as to be spaced apart from said transportation belt and orthogonal to the respective transportation direction.

12. Modular insert according to one of the preceding claims,
**characterized in that** the process-transfer installation (44) is configured for holding a workpiece (56; 156) in the process nest (48; 148) in such a manner that a further workpiece on the first transportation section (40; 140) may bypass the process nest (48; 148) having the workpiece held therein.

13. Modular insert according to Claim 12,
**characterized in that** the process-transfer installation (44) comprises a lifting/pivoting device which is configured for lifting a workpiece (56; 156) in one position out of the first transportation section (40; 140) and the process nest (48; 148), and for pivoting said workpiece (56; 156) about substantially 180° into the respective other of these positions.

14. Modular insert according to Claim 13,
**characterized in that** the process-transfer installation (44) comprises two lifting installations (72, 74), in particular lifting pistons, which are activatable in a mutually separate manner, and of which in the case of a static process-transfer installation (44) the one lifting installation (72 or 74) is assigned to one position out of the first transportation section (40) and the process nest (48), and the other lifting installation (74 or 72) is assigned to the respective other position.

15. Modular insert according to one of the preceding claims,
**characterized in that** the module platform (112) has module receptacles (118) of variable dimensions, in particular of variable width.

## Revendications

1. Tiroir modulaire (14; 114) qui est fixement assemblé à un dispositif de transport partiel (43; 143) et qui peut être introduit de concert avec celui-ci dans une plate-forme modulaire (12; 112) d'une ligne de fabrication, dans lequel le dispositif de transport partiel (43; 143) présente une première voie de transport (40; 140), qui est conçue pour le transport d'une pièce (56; 156) essentiellement sur la largeur du tiroir modulaire (14; 114) dans une première direction de transport (T1), de telle manière que les dispositifs de transport partiels (43; 143) de tous les tiroirs modulaires (14; 114), qui sont introduits dans la plate-forme modulaire (12; 112), forment un dispositif de transport pour des pièces à usiner dans la ligne de fabrication,
dans lequel le tiroir modulaire (14; 114) présente une zone de traitement (53; 153), dans laquelle des appareils d'usinage et/ou de manipulation peuvent être disposés et dans lequel le tiroir modulaire (14; 114) présente un dispositif de déplacement de traitement (44) pour le déplacement des pièces (56, 156), **caractérisé en ce qu'**il est prévu sur le tiroir modulaire (14; 114) une niche de traitement (48, 148), dans lequel le dispositif de déplacement de traitement (44) est conçu pour déplacer une pièce (56; 156) entre la première voie de transport (40; 140) et la niche de traitement (48; 148) et dans lequel la première voie de transport (40; 140) et le dispositif de déplacement de traitement (44) sont rassemblés en un sous-groupe pré-monté (50) séparé de la zone de traitement (53; 153).

2. Tiroir modulaire selon la revendication 1,
**caractérisé en ce que** le sous-groupe pré-monté (50) comprend aussi la niche de traitement (48; 148).

3. Tiroir modulaire selon la revendication 1,
**caractérisé en ce que** le dispositif de transport partiel (43; 143) comprend une deuxième voie de transport (42; 142) pour le transport d'une pièce (56; 156) dans une deuxième direction de transport opposée (T2), dans lequel le sous-groupe pré-monté (50) comprend également la deuxième voie de transport (42; 142).

4. Tiroir modulaire selon la revendication 3,
**caractérisé en ce que** le tiroir modulaire (14; 114) comprend un dispositif de déplacement de voie de transport (46; 146) pour le déplacement de pièces (56; 156) entre la première et la deuxième voie de transport (40, 42; 140, 142), dans lequel le sous-groupe pré-monté (50) comprend également le dispositif de déplacement de voie de transport (46).

5. Tiroir modulaire selon l'une quelconque des revendications précédentes, **caractérisé en ce que** le tiroir modulaire (14; 114) présente un côté opérateur (B) accessible à une personne de conduite et le dispositif de transport (40, 42; 140, 142) est prévu entre le côté opérateur (B) et la zone de traitement (53; 153).

6. Tiroir modulaire selon l'une quelconque des revendications précédentes, **caractérisé en ce qu'**un composant parmi le tiroir modulaire (14; 114) et la plate-forme modulaire (12; 112) comprend au moins un connecteur électrique mâle et l'autre composant respectif comprend au moins un connecteur électrique femelle pour la connexion audit au moins un connecteur électrique mâle, afin de transférer de l'énergie électrique et/ou des signaux électriques, en particulier des signaux électriques d'état et/ou des instructions de commande entre le tiroir modulaire (14; 114) et la plate-forme modulaire (12; 112).

7. Tiroir modulaire selon l'une quelconque des revendications précédentes, **caractérisé en ce qu'**un composant parmi le tiroir modulaire (14; 114) et la plate-forme modulaire (12; 112) comprend au moins un connecteur pneumatique mâle et l'autre composant respectif comprend au moins un connecteur pneumatique femelle pour la connexion audit au moins connecteur pneumatique mâle, afin de transmettre de l'air comprimé entre le tiroir modulaire (14; 114) et la plate-forme modulaire (12; 112).

8. Tiroir modulaire selon une des revendications 6 ou 7, **caractérisé en ce qu'**au moins un élément de connexion, un connecteur électrique mâle, un connecteur électrique femelle, un connecteur pneumatique mâle, un connecteur pneumatique femelle, est raccordé au tiroir modulaire (114) par une conduite flexible.

9. Tiroir modulaire selon les revendications 6 et 7, éventuellement en impliquant la revendication 8, **caractérisé en ce qu'**un composant parmi le tiroir modulaire (14; 114) et la plate-forme modulaire (12; 112) présente un connecteur mâle hybride (47) avec au moins un connecteur électrique mâle et au moins un connecteur pneumatique mâle, et l'autre composant respectif présente un connecteur femelle hybride avec au moins un connecteur électrique femelle et au moins un connecteur pneumatique femelle.

10. Tiroir modulaire selon l'une quelconque des revendications précédentes, **caractérisé en ce que** le tiroir modulaire (14; 114) comprend un sous-groupe de soupapes (38; 138) avec une multiplicité de soupapes de commande pneumatique, dans lequel au moins une voie de transport (40, 42; 140, 142) est disposée entre le sous-groupe de soupapes (38; 138) et la zone de traitement (53; 153).

11. Tiroir modulaire selon l'une quelconque des revendications précédentes, éventuellement en impliquant la revendication 3, **caractérisé en ce qu'**une voie de transport (40, 42; 140, 142) présente une bande transporteuse ou/et deux bandes transporteuses (54) disposées à distance l'une de l'autre orthogonalement à la direction de transport respective ou/et une bande transporteuse et un dispositif de transport passif, par exemple une voie de rouleaux de transport, disposé à distance de celle-ci orthogonalement à la direction de transport respective.

12. Tiroir modulaire selon l'une quelconque des revendications précédentes, **caractérisé en ce que** le dispositif de déplacement de traitement (44) est conçu pour maintenir une pièce (56; 156) dans la niche de traitement (48; 148) de telle manière qu'une autre pièce puisse franchir sur la première voie de transport (40; 140) la niche de traitement (48; 148) avec la pièce maintenue dans celle-ci.

13. Tiroir modulaire selon la revendication 12,
**caractérisé en ce que** le dispositif de déplacement de traitement (44) comprend un dispositif de levage/pivotement, qui est conçu pour soulever une pièce (56; 156) dans une position hors de la première voie de transport (40; 140) et de la niche de traitement (48; 148) et pour la faire pivoter essentiellement de 180° respectivement dans l'autre de ces positions.

14. Tiroir modulaire selon la revendication 13,
**caractérisé en ce que** le dispositif de déplacement de traitement (44) comprend deux dispositifs de levage (72, 74) actionnables séparément l'un de l'autre, en particulier des pistons de levage, parmi lesquels, lorsque le dispositif de déplacement de traitement (44) n'est pas déplacé, un premier dispositif de levage (72 ou 74) est associé à une position hors de la première voie de transport (40) et de la niche (48) et l'autre dispositif de levage (74 ou 72) est respectivement associé à l'autre position.

15. Tiroir modulaire selon l'une quelconque des revendications précédentes, **caractérisé en ce que** la plate-forme modulaire (112) présente des logements de modules (118) de dimension variable, en particulier de largeur variable.
